# EUROPÄISCHE PATENTANMELDUNG

(11) **EP 3 305 731 A1**
(43) Veröffentlichungstag der Anmeldung: **11.04.2018**
(21) Anmeldenummer: 16192966.6
(22) Anmeldetag: 08.10.2016
(51) Int. Cl.: C02F 1/54, C02F 1/56, C02F 1/68, C02F 101/20, C02F 101/30

(54) **VERFAHREN ZUR WASSERAUFBEREITUNG MIT POLYMERKONDENSATEN**

(71) Anmelder: Roeber, Oliver, 9526 Zuckenriet (CH)
(72) Erfinder: Roeber, Oliver, 8803 Rüschlikon (CH); Olschweski, Britigtte, 12557 Berlin (DE); Schwarze, Michael, 12205 Berlin (DE); Schomäcker, Reinhard, 13589 Berlin (DE); Tupinamba Lima, Michelle, 10627 Berlin (DE); Hüttmann, Stephan, 24235 Brodersdorf (DE)
(74) Vertreter: Fabry, Bernd

(57) **Zusammenfassung**

Vorgeschlagen wird ein Verfahren zur Aufbereitung von Wasser sowie wässrigen Lösungen oder Zubereitungen, umfassend die folgenden Schritte:
(a) Inkontaktbringen des die abzutrennenden Schadstoffe enthaltenden wässrigen Mediums mit Polymerkondensaten in Kontakt bringt, die dadurch erhältlich sind, dass man Mikroorganismen mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt;
(b) Abtrennen der an die Polymerkondensate chemisch oder physikalisch gebundenen Schadstoffe unter Rückgewinnung des gereinigten wässrigen Mediums.

## Beschreibung

### GEBIET DER ERFINDUNG

Die Erfindung befindet sich auf dem Gebiet der Wasseraufbereitung und betrifft ein neues Verfahren, bei dem spezielle hochmolekulare Polymerkondensate als Adsorptionsmedien eingesetzt werden.

### STAND DER TECHNIK

Trinkwasser ist das wichtigste Lebensmittel, es kann nicht ersetzt werden (Eingangs- und Leitsatz der DIN 2000). Als Trinkwasser ist jedes Wasser definiert, das zum Trinken, zum Kochen, zur Zubereitung von Speisen und Getränken oder insbesondere zu den folgenden häuslichen Zwecken bestimmt ist:
- Körperpflege und -reinigung
- Reinigung von Gegenständen, die bestimmungsgemäß mit Lebensmitteln in Berührung kommen (Gläser, Geschirr, Bestecke)
- Reinigung von Gegenständen, die bestimmungsgemäß nicht nur vorübergehend mit dem menschlichen Körper in Kontakt kommen (Kleidung, Wäsche)

Trinkwasser ist Süßwasser mit einem so hohen Reinheitsgrad, dass es für den menschlichen Gebrauch geeignet ist, insbesondere zum Trinken und zur Speisenbereitung. Trinkwasser darf keine krankheitserregenden Mikroorganismen enthalten und sollte eine Mindestkonzentration an Mineralstoffen enthalten. Die Güteanforderungen an Trinkwasser sind in Deutschland in der DIN 2000 und in den gesetzlichen Grundlagen, der Trinkwasserverordnung (TrinkwV) sowie in der "Allgemeinen Verordnung für die Versorgung mit Wasser" (AVBWasserV) festgelegt. Im Gegensatz zu anderen natürlichen Ressourcen wird Wasser nicht effektiv verbraucht. Wasser wird nur gebraucht und dabei jedoch mit unterschiedlichsten Schadstoffen verunreinigt.

Der Stand der Technik kennt zahlreiche Verfahren, um Wasser von darin enthaltenen gelösten oder fein verteilten Schadstoffen zu befreien. Man unterscheidet im Wesentlichen zwischen folgenden Alternativen:
- mechanische Aufbereitung (z. B. mit Hilfe von Rechen, Sieben, Filtern und dergleichen);
- physikalische Verfahren (z. B. Belüftung, Verdüsung, Sedimentation, Flotation, Adsorption, Vakuumverfahren, thermische Einwirkungen);
- chemische Verfahren (z.B. Oxidation, Desinfektion, Flockung, Entcarbonisierung, Ionenaustausch, Elektrodeionisation);
- Membranverfahren (z. B. Nanofiltration, Osmose);
- biologische Verfahren (biochemische Oxidation, Schlammfaulung, Belebtschlammverfahren, anaerobe Abwasserreinigung).

Die genannten Verfahren weisen jedoch unterschiedliche Nachteile auf: solche die einfach durchzuführen sind, wie etwa die mechanische Behandlung, sind zeitaufwendig und wenig effizient. Solche die effizient sind, wie etwa die Umkehrosmose, sind technisch sehr aufwendig und daher teuer. Andere Alternativen, wie etwa Adsorptionsverfahren, sind technisch leicht durchführbar und auch effizient, sind aber sehr selektiv und lassen sich daher nur auf einzelne Schadstoffe anwenden.

Die Aufgabe der vorliegenden hat daher darin bestanden, Wasser aus unterschiedlichen Quellen und mit unterschiedlichen Verschmutzungsgraden von hydrophilen oder hydrophoben Schadstoffen unterschiedlichster Natur praktisch quantitativ, technisch einfach und bei hoher Umweltverträglichkeit zu befreien. Dies gilt insbesondere für die Abtrennung von fluorierten Tensiden aus Grundwasser.

### BESCHREIBUNG DER ERFINDUNG

Ein erster Gegenstand der Erfindung betrifft ein Verfahren zur Aufbereitung von Wasser sowie wässrigen Lösungen oder Zubereitungen, umfassend die folgenden Schritte:
(a) Inkontaktbringen des die abzutrennenden Schadstoffe enthaltenden wässrigen Mediums mit Polymerkondensaten in Kontakt bringt, die dadurch erhältlich sind, dass man Mikroorganismen mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt;
(b) Abtrennen der an die Polymerkondensate physikalisch oder chemisch gebundenen Schadstoffe unter Rückgewinnung des gereinigten wässrigen Mediums.

Überraschenderweise wurde gefunden, dass oberflächenaktive Polymerkondensate der beschriebenen Art in hervorragender Weise in der Lage sind, sowohl hydrophile wie hydrophobe Schadstoffe unterschiedlichster Natur und insbesondere polyfluorierte Tensiden bereits unterhalb der kritischen Micellbildungskonzentration (c.m.c.) physikalisch zu binden, so dass sie mit geeigneten Verfahren anschließend quantitativ entfernt werden können.

Die Natur des aufzubereitenden Wassers ist dabei weitgehend unkritisch, d.h. es kann sich sowohl um Trinkwasser, aber auch um Abwasser, Prozesswasser oder Grundwasser handeln. Bei den Schadstoffen, dies zu entfernen gilt, kann es sich beispielsweise um polyfluorierten Tenside, Medikamentenrückstände, Farbstoffe, und Metallrückstände (wie etwa Edelmetalles, Schadmetalle oder Seltene Erden) und dergleichen handeln.

### POLYMERKONDENSATE

Die Polymerkondensate, die im Sinne des erfindungsgemäßen Verfahrens als Adsorptionsmittel eingesetzt werden, sind aus dem Stand der Technik bekannt. Umfangreich und mit vielen Beispielen versehen werden sie in der Europäischen Patentschrift EP 0671973 B1 (OLSCHEWSKI), die bezüglich der Herstellung der Stoffe vollumfänglich über direkte Bezugnahme in die Offenbarung eingeschlossen wird.

Die Polymerkondensate der vorliegenden Erfindung werden auf der Basis von in großen Mengen zur Verfügung stehenden Mikroorganismen wie Faulschlamm, Belebtschlamm oder Hefe, insbesondere Bäckerhefe oder Bierhefe gewonnen. Anders als im Stand der Technik sonst beschrieben, dienen diese Mikroorganismen nicht als Biokatalysatoren, die an der eigentlichen chemischen Reaktion nicht teilnehmen, sondern stellen selbst das Ausgangsmaterial dar. Denn Tatsache ist, dass beispielsweise die im Sinne der Erfindung bevorzugten Hefen nichts anderes als komplexe Mischungen von im wesentlichen Proteinen und Polysacchariden darstellen, die über zahlreiche funktionelle Gruppen für nachfolgende Reaktionsschritte verfügen. Als alternative Rohstoffe kommen Proteinzuckerkomplexe wie etwa Maismehl oder Tiermehl in Betracht.

Das Molekulargewicht dieser Ausgangsstoffe liegt im Bereich oberhalb von 2 mDa, was dazu führt, dass weder eine Löslichkeit in Wasser oder Öl besteht. Im ersten Reaktionsschritt erfolgt daher ein alkalischer Aufschluss, d.h. die Mikroorganismen werden mit wässriger hochkonzentrierter Alkalilauge, beispielsweise einer 30 Gew.-%igen Natronlauge versetzt, so dass sich ein pH-Wert im Bereich von mindestens 10, vorzugsweise von 12 bis 14 einstellt, und unterhalb der Siedetemperatur, vorzugsweise bei 70 bis 80 °C etwa 2 bis 5 Stunden gerührt. Bei diesem Aufschluss werden die hochmolekularen Ketten aufgebrochen und Bruchstücke erhalten, die gegenüber den Ausgangsstoffen nur noch etwa ein Zehntel des Molekulargewichtes aufweisen. Vorzugsweise besitzen die Bruchstücke ein Molekulargewicht im Bereich von etwa 20 bis etwa 250 kDa, insbesondere etwa 50 bis etwa 220 kDa und besonders bevorzugt etwa 150 bis etwa 200 kDa. Dabei versteht es sich, dass einzelne Bruchstücke auch deutlich höhere oder niedrigere Molekulargewichte aufweisen können. Daher verstehen sich die obigen Angaben insbesondere als Mittelwerte bezogen auf etwa 90 Gew.-% der Gesamtfraktion.

Im zweiten Verfahrensschritt, der getrennt oder als "Eintopfverfahren" durchgeführt werden kann, wird den aufgeschlossenen Mikroorganismen Stoffe zugesetzt, die mit den funktionellen Gruppen in den Molekülen abreagieren können. Dabei handelt es sich um Triglyceride, mehrwertige Carbonsäuren und/oder Polyole mit 2 bis 12 Kohlenstoffatomen und 2 bis 6 Hydroxylgruppen. Die Reaktionen finden basenkatalysiert statt; d.h. in der Regel bedarf es keines weiteren Zusatzes an Alkalihydroxid, da die Lösung noch basisch genug eingestellt ist.

Bei Zusatz der Triglyceride kommt es unter alkalischen Bedingungen zu einer Verseifung. Fettsäuren werden freigesetzt, die mit Hydroxyl- oder Aminogruppen in den Protein- oder Polyzuckern Ester- oder Amidbindungen eingehen können. Zurück bleiben vor allem Partialglyceride, die selbst oberflächenaktiv sind und ausgezeichnete Emulgatoreigenschaften aufweisen. Fettsäuren, die nicht abreagieren, liegen nach der Reaktion als Seifen vor und sind damit ebenfalls oberflächenaktiv.

Geeignete Triglyceride weisen in der Regel 6 bis 22 und vorzugsweise 12 bis 18 Kohlenstoffatome auf und können gesättigt sein oder 1, 2 oder 3 Doppelbindungen aufweisen. Typische Beispiele sind pflanzliche Öle wie Palmöl, Palmkernöl, Kokosöl, Sonnenblumenöl, Sojaöl, Olivenöl, Rapsöl, Distelöl, Leinöl oder (see)tierische Ausgangsstoffe wie Fischöl oder Rindertalg. Die Ausgangsstoffe können Jodzahlen im Bereich von 1 bis 120 aufweisen. Vorzugsweise werden Mischungen von gesättigten und ungesättigten Triglyceriden eingesetzt, wie beispielsweise (gehärtetes) Palmöl und Sonnenblumenöl oder (gehärteter) Rindertalg und Rapsöl oder teilgehärtetes Kokosöl. Besonders bevorzugte Lipidkomponenten sind Kokosöl, Rapsöl, Sonnenblumenöl, Schweineschmalz und Rindertalg sowie deren Gemiscche.

Durch den Zusatz von mehrwertigen Carbonsäuren kann es über die Säurefunktionen zur Bildung von verbrückten Spezies kommen. Als mehrwertige Carbonsäuren kommen Oxalsäure, Adipinsäure, Malonsäure, Maleinsäure und insbesondere Hydroxysäuren wie Zitronen- und Weinsäure in Betracht.

Die Polyole sind in der Lage mit Säuregruppen in den polymeren Bruchstücken abzureagieren oder überschüssige freigesetzte Fettsäuren abzufangen. Sie können noch weitere funktionelle Gruppen, insbesondere Aminogruppen, enthalten bzw. selbst mit Stickstoff modifiziert sein. Typische Beispiele sind
- Glycerin;
- Alkylenglykole, wie beispielsweise Ethylenglykol, Diethylenglykol, Propylenglykol, Butylenglykol, Hexylenglykol sowie Polyethylenglykole mit einem durchschnittlichen Molekulargewicht von 100 bis 1.000 Dalton;
- technische Oligoglyceringemische mit einem Eigenkondensationsgrad von 1,5 bis 10 wie etwa technische Diglyceringemische mit einem Diglyceringehalt von 40 bis 50 Gew.-%;
- Methyolverbindungen, wie insbesondere Trimethylolethan, Trimethylolpropan, Trimethylolbutan, Pentaerythrit und Dipentaerythrit;
- Niedrigalkylglucoside, insbesondere solche mit 1 bis 8 Kohlenstoffen im Alkylrest, wie beispielsweise Methyl- und Butylglucosid;
- Zuckeralkohole mit 5 bis 12 Kohlenstoffatomen, wie beispielsweise Sorbit oder Mannit,
- Zucker mit 5 bis 12 Kohlenstoffatomen, wie beispielsweise Glucose oder Saccharose;
- Aminozucker, wie beispielsweise Glucamin;
- Dialkoholamine, wie Diethanolamin oder 2-Amino-1,3-propandiol.

Das molare Verhältnis der reaktionsfähigen Gruppen in der der Summe von Biomasse und Triglycerid einerseits und mehrwertigen Carbonsäuren und Polyolen andererseits beträgt vorzugsweise 10:1 bis 1:2 und insbesondere etwa 3:1 bis etwa 1:1. Über die Auswahl der Derivatisierungsstoffe und deren Menge lässt sich der HLB-Wert der Reaktionsprodukte in weitem Maße einstellen, so dass je nach Bedarf eher lipophile Zubereitungen (HLB-Werte 3 bis 10, vorzugsweise 5 bis 8) oder hydrophile Mischungen (HLB-Werte 11 bis 30, vorzugsweise 12 bis 18) erhalten werden. Bezüglich der Auswahlregeln sei wieder auf die Offenbarung in der eingangs genannten Patentschrift EP 0671973 B1 verwiesen.

Die bevorzugten Polymerkondensate werden auf Basis von Mikroorganismen erhalten, die nach dem alkalischen Aufschluss mit Triglyceriden und Zitronensäure weiter umgesetzt werden. Besonders bevorzugt sind diejenigen, bei denen die Mikroorganismen wiederum Hefen, speziell Bäckerhefe darstellen.

Ein besonderer Vorteil des Einsatzes der oberflächenaktiven Polymerkondensate besteht darin, dass sie bereits in sehr kleinen Einsatzmengen wirksam sind, speziell auch unterhalb ihrer kritischen Mizellbildungskonzentration. Die Schadstoffe werden an die Polymermatrix gebunden oder in sie eingebettet, die Bildung von Mizellen ist also nicht erforderlich. Gleichzeitig sind die Polymerkondensate ökologisch völlig unbedenklich und werden in die niedrigste Wassergefährdungsklasse 1 eingestuft.

### KOMPLEXBILDNER

In einer bevorzugten Ausführungsform der vorliegenden Erfindung können die Polymerkondensate mit weiteren Komplexbildnern, Sammler- und Ankermolekülen und/oder niedermolekularen Tensiden eingesetzt werden. Für diesen Zweck kommen beispielsweise in Frage:Alkalisalze der Ethylendiamintetraessigsäure (EDTA) oder der Nitrilotriessigsäure (NTA) sowie Alkalimetallsalze von anionischen Polyelektrolyten wie Polymaleaten und Polysulfonaten. Eine bevorzugte Klasse von Komplexbildnern sind die Phosphonate, die in bevorzugten Textilbehandlungsmitteln in Mengen von 0.01 bis 2.5 Gew.-%, vorzugsweise 0.02 bis 2 Gew.% und insbesondere von 0.03 bis 1.5 Gew.% enthalten sind. Zu diesen bevorzugten Verbindungen zählen insbesondere Organophosphonate wie beispielsweisel-Hydroxyethan-1,1-diphosphonsaeure (HEDP), Aminotri(methylenphosphonsäure) (ATMP), Diethylentriaminpenta(methylenphosphonsäure) (DTPMP bzw. DETPMP) sowie 2-Phosphonobutan-1,2,4-tricarbonsäure (PBS-AM), die zumeist in Form ihrer Ammonium- oder Alkalimetallsalze eingesetzt werden.

### SCHADSTOFFABTRENNUNG

Die Abtrennung der Polymerkondensate mit den daran gebundenen Schadstoffen kann nach unterschiedlichen an sich bekannten Verfahren erfolgen. Typische Beispiele sind das Ausschäumen oder Abskimmen, d.h. das Absaugen der Stoffe von der Oberfläche. Alternativ kommen Dichtetrennung (Dekantieren, Zentrifugieren), Ausfällung oder die Zugabe von Flockungsmitteln mit nachfolgender Filtration in Frage. Die Stoffe können anschließend an weitere feste Adsorptionsmittel gebunden werden.

Ein erster bevorzugter Aspekt der vorliegenden Erfindung betrifft die Abtrennung der Polymerkondensate zusammen mit den Schadstoffen durch Flotation. Hierunter versteht man ein physikalisch-chemisches Trennverfahren für feinkörnige Feststoffe aufgrund der unterschiedlichen Oberflächenbenetzbarkeit der Partikel. Dabei macht man sich zunutze, dass Gasblasen sich leicht an hydrophobe, d. h. durch Wasser schwer benetzbare Oberflächen anlagern und den Partikeln Auftrieb verleihen, so dass diese schwimmen. Voraussetzung ist, dass das verwendete Gas sich selbst schwer in Wasser löst. Unter diesen Bedingungen sammeln sich an den hydrophoben Partikeloberflächen die ebenfalls hydrophoben Gasblasen.

Im Sinne der Erfindung wird dazu in ein Flotationsbad durch einen Schnellrührer oder Lanzen Luft eingetragen und fein verteilt. Im Flotationsbad enthaltene Tenside und Schaumstabilisatoren stabilisieren dabei die Luftblasen. Eine Sorte Partikel lässt sich schlechter mit Wasser benetzen und haftet daher besser an den Luftblasen. Diese Partikel schwimmen mit den Luftblasen auf und können mit dem Schaum abgeschöpft werden. Die übrigen Partikel sollen in der Trübe verbleiben und werden am Ende des Flotationsprozesses abgepumpt.

Zusätzlich zu den Polymerkondensaten können im Rahmen der Aufreinigung durch Flotation weitere Hilfsstoffe eingesetzt werden, nämlich:
- *Schäumer,* die zum Stabilisieren der Luftblasen dienen;
- *Sammler,* die den im Schaum auszubringenden Gemengeanteil hydrophobieren, während die anderen Komponenten hydrophil bleiben. Als Sammler eignen sich bestimmte Schwefelverbindungen (wie Xanthogenate, Dithiophosphate, Mercaptane), Amine, Alkylsulfonate, sowie Fettsäuresalze;
- *Regler* wie *pH-Regulatoren* und *Flockungsmittel,* die zur Optimierung und selektiven Auftrennung von Gemischen dienen; sowie
- *Drücker* (z. B. Natrium- und Kaliumsilikate), die die Benetzbarkeit verbessern und das Absinken im Trennmedium beschleunigen.

Ein weiterer bevorzugter Aspekt der vorliegenden Erfindung betrifft die Abtrennung der Polymerkondensate zusammen mit den Schadstoffen durch Membranfiltration, speziell durch Ultra- oder Nanofiltration. Hierbei handelt es sich um Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist I/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Die Nanofiltration bevorzugt Porendurchmesser im Bereich von 100 bis 5.000 und vorzugsweise etwa 500 bis 2.000 Dalton.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Sowohl Ultra- als auch Nanofiltration können im Sinne der vorliegenden Erfindung "heiß" oder "kalt", d.h. im Temperaturbereich von etwa 10 bis etwa 55 °C durchgeführt werden. Bevorzugt ist es jedoch, bei Temperaturen im niedrigen Bereich von etwa 10 bis etwa 20 °C zu arbeiten.

### GEWERBLICHE ANWENDBARKEIT

Ein weiterer Gegenstand der Erfindung betrifft die Verwendung von Polymerkondensaten, die dadurch erhältlich sind, dass man Mikroorganismen mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt zur Aufbereitung von Wasser sowie wässrigen Lösungen oder Zubereitungen. Die Einsatzmenge kann dabei sehr gering sein, beispielsweise kann sie unterhalb der kritischen Mizellbildungskonzentration der Polymerkondensate liegen.

### BEISPIELE

Die im erfindungsgemäßen Verfahren einzusetzenden Polymerkondensate stellen eine umweltfreundliche Alternative zu den klassischen Tensiden dar. Die folgenden Beispiele dienen dazu, die vorliegende Erfindung näher zu erläutern, ohne sie darauf einzuschränken. Die beiden im Folgenden Abkürzungen verwenden Abkürzungen "HeBra" und "HeSat" stehen für Polymerkondensate auf Basis Bäckerhefe mit einem durchschnittlichen Molekulargewicht von etwa 160 kDalton, die zum einen überwiegend ungesättigten und zum anderen überwiegend gesättigte Triglyceridkomponenten enthalten.

### BEISPIEL 1

### Stabilisierung von Metallkationen

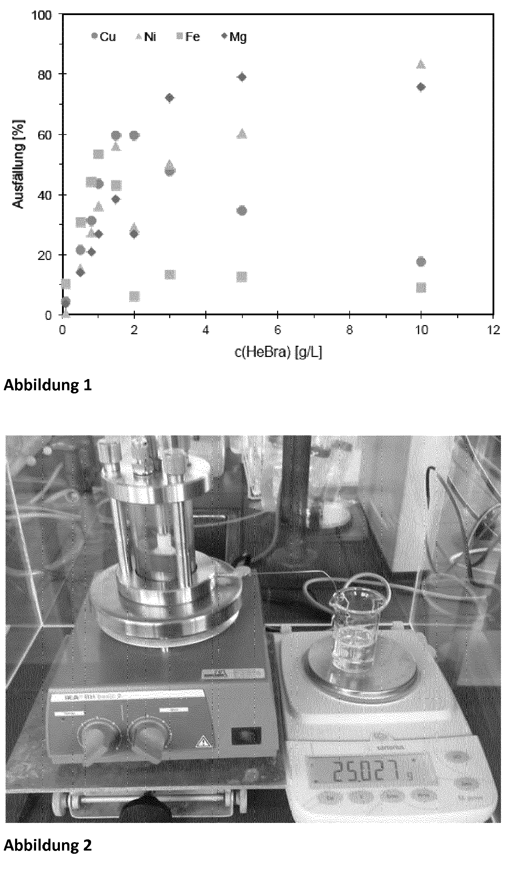

Liegen Metallionen in wässriger Lösung vor und wird der pH-Wert erhöht, kommt es zur Ausfällung der Ionen als Hydroxide. Ab wann die Ausfällung beginnt hängt vom jeweiligen Löslichkeitsprodukt K_{L} ab. Es wurde gefunden, dass die Zugabe von HeBra mit Konzentrationen oberhalb der kritischen Micellbildungskonzentration (cmc) das Ausfällen der Metallionen z.T. deutlich minimieren kann. Im Falle von Cu²⁺ - und Fe²⁺-Ionen (je 3 mM) wurden bis zu 85% der Metallionen in Gegenwart von HeBra (10 g/L) stabilisiert. Ursache ist die Komplexierung der Ionen durch die HeBra-Aggregate, wodurch diese nicht mehr als Hydroxide gefällt werden können. Der prozentuale Anteil ausgefällter Kationen (Cu²⁺, Ni²⁺, Fe²⁺, Mg⁺) als Funktion der Menge an eingesetzten Polymerkondensaten wird in **Abbildung 1** wiedergegeben.

### BEISPIEL 2

### Filtration von Farbstoffen und Metallionen

Die Aggregate der Polymerkondensate sind groß genug, um von einer geeigneten Ultrafiltrationsmembran aus wässrigen Lösungen abgetrennt zu werden. Stoffe die selektiv an HeBra gebunden sind, können somit aus wässrigen Lösungen entfernt werden. Für kationische Farbstoffe, z.B. Methylenblau, ergeben sich nahezu quantitative Rückhalte. **Abbildung 2** zeigt den Versuchsaufbau für die Filtration einer Polymerkondensatlösung.

Auch an HeBra gebundene Metallionen können durch Filtration aus wässriger Lösung entfernt werden. Für Cu²⁺- und Ni²⁺-Ionen (3 mM) wurden in Gegenwart von HeBra (5 g/L) und eingestelltem pH-Wert von 10 Rückhalte von mehr als 70 % erzielt.

**Abbildung 1** zeigt Rückhalte von Ni²⁺ und Cu²⁺-Ionen (3 mM) in Gegenwart von HeBra (1 bar, pH=10, 10 kDa Cellulose-Membran).

### BEISPIEL 3

### Flotation von Farbstoffen

Flotation ist eine tensidbasierte Trenntechnik, bei der die Abtrennung gelöster Stoffe oder kleiner Partikel durch den Tensidschaum erfolgt. Die Ergebnisse hängen stark von den Flotationsbedingungen ab. HeSat (0,5 g/L) wurde erfolgreich für die Abtrennung kationischer Farbstoffe wie Malachitgrün, Kristallviolett und Methylenblau (10 mg/L) eingesetzt. Die Entfernung der Farbstoffe ist mit >90% möglich. Die Aufkonzentrierungsfaktoren im Schaum liegen bei 5-7. In der hier verwendeten Flotationszelle wurden die Ergebnisse innerhalb von 4h bei einer Gasgeschwindigkeit von 13,4 mL/min N₂ erreicht. Im Vergleich zu SDS sind die Aufkonzentrierungsfaktoren höher, da für HeSat weniger Wasser zur Schaumbildung benötigt wird. Zusätzlich bilden HeSat/HeBra einen makroskopisch stabileren Schaum.

**Abbildung 2** zeigt den Abtrennungsfaktor (R) und Aufkonzentrierungsfaktor (EF) für kationische und anionische Farbstoffe mittels HeSat. MG: Malachitgrün, CV: Kristallviolett, MB: Methylenblau, MO: Methylorange, EY: Eosin Y, CR: Kresolrot.

Anionische Farbstoffe können unter Verwendung von HeSat/HeBra nicht effektiv durch Flotation entfernt werden, aber die selektive Wechselwirkung mit kationischen Farbstoffen ermöglich eine Trennung von anionischen und kationischen Farbstoffen, z.B. Malachitgrün und Methylorange.

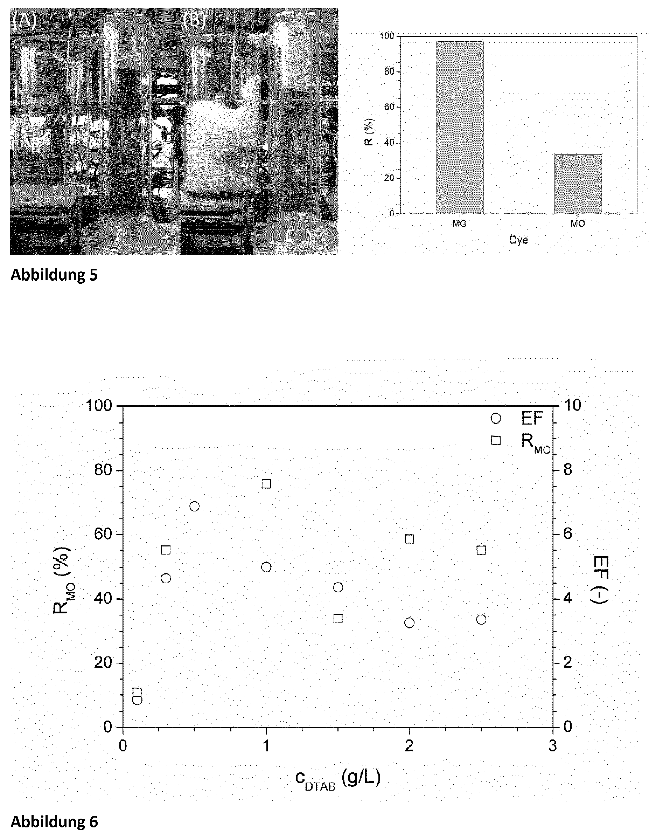

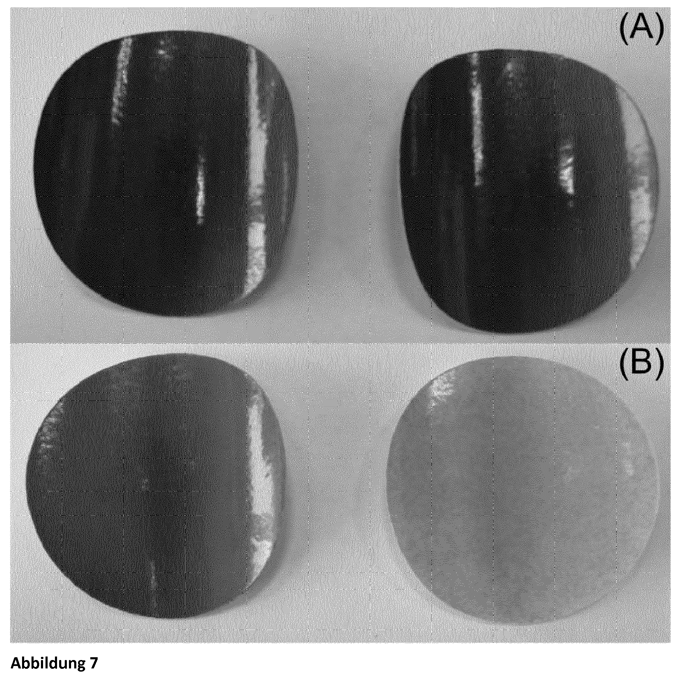

**Abbildung 5** zeigt den Versuchsaufbau und die Ergebnisse bei der Trennung von Malachitgrün und Methylorange durch Flotation mit HeSat. Die Abtrennung von anionischen Farbstoffen kann deutliche verbessert werden, wenn HeSat mit einem entsprechenden kationischer Hilfsstoff gemischt wird. Eine Beimischung von Dodecyltrimethylammoniumbromid (DTAB) (0,5-1 g/L) steigert die Abtrennung von Methylorange von ca. 10% auf ca. 80% unter sonst gleichen Bedingungen.

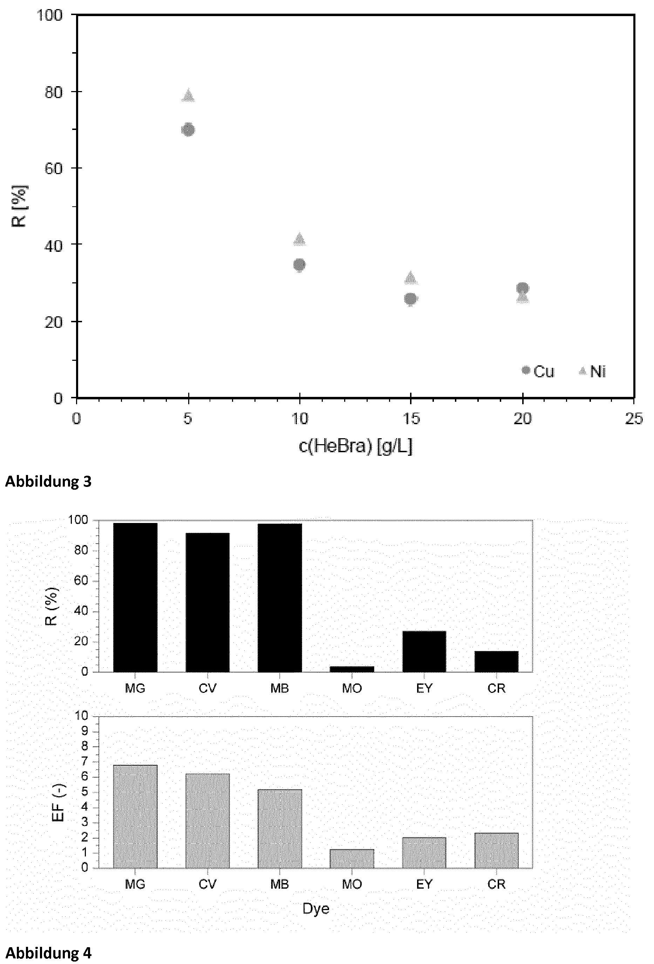

**Abbildung 3** zeigt den Abtrennungsfaktor (R) und Aufkonzentrierungsfaktor (EF) für Methylorange für Mischungen aus HeBra und DTAB.

### BEISPIEL 4

### Desorption von Farbstoffen

HeBra-Lösungen eignen sich zur Dekontamination von Oberflächen und fördern die Mobilisation adsorptiv gebundener Kontaminanten. Zwei hydrophobe Polyethersulfon(PES)-Membranen wurden in konzentrierter Methylenblau-Lösung eingelegt und nach Adsorption von Methylenblau einmal in destilliertes Wasser und einmal in HeBra-Lösung (5 g/L) eingelegt. Für die HeBra-Lösung wurde eine deutliche Entfärbung der PES-Membran beobachtet.

**Abbildung 4** zeigt (A) hydrophobe PES-Membranen eingefärbt mit Methylenblau und (B) nach dem Schütteln in destilliertem Wasser (links) bzw. HeBra.

## Patentansprüche

1. Verfahren zur Aufbereitung von Wasser sowie wässrigen Lösungen oder Zubereitungen, umfassend die folgenden Schritte:
(a) Inkontaktbringen des die abzutrennenden Schadstoffe enthaltenden wässrigen Mediums mit Polymerkondensaten in Kontakt bringt, die dadurch erhältlich sind, dass man Mikroorganismen mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt;
(b) Abtrennen der an die Polymerkondensate chemisch oder physikalisch gebundenen Schadstoffe unter Rückgewinnung des gereinigten wässrigen Mediums.

2. Verfahren nach Anspruch 1, **dadurch gekennzeichnet, dass** man Trinkwasser, Abwasser, Prozesswasser oder Grundwasser aufbereitet.

3. Verfahren nach den Ansprüchen 1 und/oder 2, **dadurch gekennzeichnet, dass** man das wässrige Medium von Schadstoffen befreit, die ausgewählt sind aus der Gruppe, die gebildet wird von polyfluorierten Tensiden, Medikamentenrückständen, Farbstoffen, und Metallrückständen.

4. Verfahren nach mindestens einem der Ansprüche 1 bis 3, **dadurch gekennzeichnet, dass** man Polymerkondensate einsetzt, die ein durchschnittliches Molekulargewicht im Bereich von etwa 20 bis etwa 250 kDa einsetzt.

5. Verfahren nach mindestens einem der Ansprüche 1 bis 4, **dadurch gekennzeichnet, dass** man Polymerkondensate auf Basis von Mikroorganismen einsetzt, die ausgewählt sind aus der Gruppe, die gebildet wird von Hefen, Faulschlamm oder Belebtschlamm.

6. Verfahren nach mindestens einem der Ansprüche 1 bis 4, **dadurch gekennzeichnet, dass** man Polymerkondensate auf Basis von Proteinzuckerkomplexen einsetzt, die ausgewählt sind aus Maismehl oder Tiermehl einsetzt.

7. Verfahren nach mindestens einem der Ansprüche 1 bis 6, **dadurch gekennzeichnet, dass** man Polymerkondensate auf Basis von Triglyceriden einsetzt, die 6 bis 22 Kohlenstoffatome und 0 oder 1, 2 oder 3 Doppelbindungen aufweisen.

8. Verfahren nach mindestens einem der Ansprüche 1 bis 7, **dadurch gekennzeichnet, dass** man Polymerkondensate auf Basis von mehrwertigen Carbonsäuren einsetzt, die ausgewählt sind aus der Gruppe, die gebildet wird von Oxalsäure, Adipinsäure, Malonsäure, Maleinsäure, Zitronensäure, Weinsäure und deren Gemischen.

9. Verfahren nach mindestens einem der Ansprüche 1 bis 8, **dadurch gekennzeichnet, dass** man Polymerkondensate auf Basis von Polyolen einsetzt, die ausgewählt sind aus der Gruppe, die gebildet wird von Glycerin; Alkylenglykolen, technischen Oligoglyceringemischen mit einem Eigenkondensationsgrad von 1,5 bis 10, Methyolverbindungen, Niedrigalkylglucosiden, Zuckeralkoholen mit 5 bis 12 Kohlenstoffatomen, Zuckern mit 5 bis 12 Kohlenstoffatomen, Aminozuckern, Dialkoholaminen, und deren Gemischen.

10. Verfahren nach mindestens einem der Ansprüche 1 bis 9, **dadurch gekennzeichnet, dass** man die Polymerkondensate zusammen mit Komplexbildnern einsetzt.

11. Verfahren nach mindestens einem der Ansprüche 1 bis 10, **dadurch gekennzeichnet, dass** man die Polymerkondensate unterhalb deren kritischen Michellbildungskonzentration einsetzt.

12. Verfahren nach mindestens einem der Ansprüche 1 bis 11, **dadurch gekennzeichnet, dass** man die Polymerkondensate zusammen mit den Schadstoffen durch Ausschäumen oder Abskimmen entfernt.

13. Verfahren nach mindestens einem der Ansprüche 1 bis 12, **dadurch gekennzeichnet, dass** man die Polymerkondensate zusammen mit den Schadstoffen durch Dichtetrennung, Ausfällung oder Flockung entfernt.

14. Verfahren nach mindestens einem der Ansprüche 1 bis 14, **dadurch gekennzeichnet, dass** man die Polymerkondensate zusammen mit den Schadstoffen durch Membranfiltration entfernt.

15. Verwendung von Polymerkondensaten, die dadurch erhältlich sind, dass man Mikroorganismen mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt, zur Aufbereitung von Wasser sowie wässrigen Lösungen oder Zubereitungen.
